# EUROPEAN PATENT APPLICATION

(11) **EP 3 531 396 A1**
(43) Date of publication of application: **28.08.2019**
(21) Application number: 17863181.8
(22) Date of filing: 25.09.2017
(51) Int. Cl.: G08G 1/14, B60Q 9/00

(54) **VEHICLE-MOUNTED TERMINAL, PARKING SPACE SHARING SYSTEM, AND PARKING SPACE DETERMINATION METHOD AND APPARATUS**

(30) Priority: 19.10.2016 CN 201610911558
(71) Applicant: ZTE Corporation, Shenzhen, Guangdong 518057 (CN)
(72) Inventor: ZHAO, Ming, Shenzhen Guangdong 518057 (CN)
(74) Representative: Algemeen Octrooi- en Merkenbureau B.V.
(86) International application number: PCT/CN2017/103158
(87) International publication number: WO 2018/072597

(57) **Abstract**

A vehicle terminal, a parking place sharing system, a parking place determination method and a device, wherein the vehicle terminal includes an inertial measurement unit IMU (10), which is configured to detect whether there is an idle area in an area whose distance from a vehicle where the vehicle terminal is located is less than a predetermined distance, and to obtain a detection result; the main control part(12) of the vehicle terminal is configured to judge whether there is an idle parking place in the idle area according to a map information when the detection result indicates a presence of the idle area. The vehicle terminal, parking place sharing system, parking place determination method and device solve the problem of poor user experience caused by the need to reconstruct the parking place or a parking lot to obtain an idle parking place in related art, and improve the user experience.

## Description

### FIELD

This application relates to the field of communication, in particular to a vehicle terminal, a parking place sharing system, a parking place determination method and a device.

### BACKGROUND

Nowadays, with a rapid development of the third generation mobile communication technology (3rd-Generation, 3G for short) and the fourth generation mobile communication technology (4rd-Generation, 4G for short) network, more and more vehicle terminal equipments are integrated with wireless communication components. Such vehicle terminal products increasingly need to act as the control center of the whole vehicle network. The extension of such control is also growing. In addition to the control of in-car equipment, it also needs to be used as the network channel and control center of in-car passenger's mobile terminal, which enables a wide usage range of the vehicle terminal. Automobile manufacturers not only hope that the vehicle terminal can provide basic communication control function, but also hopes that the vehicle terminal can provide various value-added services based on wireless communication technology. With a rapid growth of vehicle inventory at home and abroad, parking places may not keep pace with the growth of vehicle production, and the contradiction between vehicles and parking places is becoming more and more prominent. Therefore, a dynamic sharing function of parking places is a kind of value-added service with market demand. At present, there are two schemes to realize the dynamic sharing function of parking places: adding an inductive sensor to a parking place and adding network sharing to parking lot access management system.

However, shortcomings of the two schemes are obvious: the implementation of adding the inductive sensor to the parking place is to use the sensor placed in each parking place to obtain a parking place status, and then upload the parking place status to the central control system. This implementation needs to carry on reconstruction to each parking place, and causes a high reconstruction cost. The implementation of adding network sharing to parking lot access management system is to share parking place information of each parking lot to a central control system to achieve its purpose. The problem brought about by this implementation is that owners of the parking lots are different, and provision of parking place data will bring high communication costs and time costs.

In view of the above technical problems in related art, no effective solution has been put forward at present.

### SUMMARY

Embodiments of the present application provide a vehicle terminal, a parking place sharing system, a parking place determination method and a device, to at least solve the problem of poor user experience caused by the need to reconstruct the parking place or the parking lot to obtain an idle parking place in related art.

According to an embodiment of the present application, a vehicle terminal is provided, including: an inertial measurement unit (IMU), configured to detect whether there is an idle area in an area whose distance from a vehicle where the vehicle terminal is located is less than a predetermined distance, to obtain a detection result; and a main control part of the vehicle terminal, configured to judge whether there is an idle parking place in the idle area according to a map information when the detection result indicates a presence of the idle area.

In the embodiment of the present application, the main control part of the vehicle terminal is further configured to determine the idle parking place as a shared parking place when the judgment result indicates a presence of the idle parking place.

In the embodiment of the present application, the IMU is further configured to detect a running speed of the vehicle, wherein, when the running speed is less than a predetermined threshold, a detection on whether there is the idle area in the area whose distance is less than the predetermined distance is triggered.

In the embodiment of the present application, the IMU includes: a gyroscope and acceleration component, configured to detect the running speed; a radar component, configured to detect whether there is the idle area in the area whose distance is less than the predetermined distance to obtain the detection result; and an application processor component, configured to send the running speed and/or the detection result to the main control part of the vehicle terminal; wherein, when the running speed is less than the predetermined threshold, the radar component is started.

In the embodiment of the present application, the gyroscope and acceleration component includes: a three-axis gyroscope component, configured to measure a location, a moving trajectory and an angular speed of the vehicle; and a three-axis acceleration component, configured to measure an acceleration of the vehicle.

In the embodiment of the present application, the main control part of the vehicle terminal includes: an IMU controller component, configured to receive the detection result sent by the IMU; a parking place judgment component, configured to receive the detection result sent by the IMU controller component and, judge whether there is the idle parking place in the idle area according to the map information when the detection result indicates the presence of the idle area.

In the embodiment of the present application, the parking place judgment component is further configured to judge whether there is the parking place in the idle area according to the map information and, judge whether the parking place is the idle parking place according to the detection result when there is the parking place.

In the embodiment of the application, the parking place judgment component is configured to judge whether the idle area includes a parking area according to the map information; and judge whether there is the parking place in the parking area according to the map information when it is determined that the idle area includes the parking area.

In the embodiment of the present application, the main control part of the vehicle terminal is further configured to send the idle parking place to a cloud server.

In the embodiment of the present application, the main control part of the vehicle terminal includes: a parking place sharing component, configured to receive the idle parking place sent by the parking place judgment component of the main control part of the vehicle terminal and send the idle parking place to the cloud service.

In the embodiment of the present application, the cloud server is configured to push an information of the idle parking place to one or more clients according to a predetermined push strategy.

In the embodiment of the present application, the map information includes: a parking place distribution information.

According to another embodiment of the present application, a parking place sharing system is provided, including: the vehicle terminal mentioned above, a cloud server and a client; wherein, the cloud server receives an information of the idle parking place sent by the vehicle terminal, and pushes the information of the idle parking place to the client based on geographic information system (GIS) information; the client is configured to receive the information of the idle parking place sent by the cloud server and display the information of the idle parking place.

According to another embodiment of the present application, a parking place determination method is provided, including: detecting by a vehicle terminal whether there is an idle area in an area whose distance from a vehicle where the vehicle terminal is located is less than a predetermined distance, to obtain a detection result; and judging by the vehicle terminal whether there is an idle parking place in the idle area according to a map information when the detection result indicates a presence of the idle area.

In the embodiment of the present application, after judging by the vehicle terminal whether there is the idle parking place in the idle area according to the map information when the detection result indicates the presence of the idle area, the method further includes: determining by the vehicle terminal the idle parking place as a shared parking place when the judgment result indicates a presence of the idle parking place.

In the embodiment of the present application, before detecting by the vehicle terminal whether there is the idle area in the area whose distance from the vehicle where the vehicle terminal is located is less than the predetermined distance to obtain the detection result, the method further includes: detecting by the vehicle terminal a running speed of the vehicle, wherein, when the speed is less than a predetermined threshold, a detection on whether there is the idle area in the area whose distance is less than the predetermined distance is triggered.

In the embodiment of the present application, judging by the vehicle terminal whether there is the idle parking place in the idle area according to the map information when the detection result indicates the presence of the idle area includes: judging by the vehicle terminal whether there is the parking place in the idle area according to the map information; and judging by the vehicle terminal whether the parking place is the idle parking place according to the detection result when the judgment result indicates the presence of the parking place.

In the embodiment of the present application, judging by the vehicle terminal whether there is the parking place in the idle area according to the map information includes: judging by the vehicle terminal whether the idle area includes a parking area according to the map information; and judging whether there is the parking place in the parking area according to the map information when it is determined that the idle area includes the parking area.

In the embodiment of the present application, after determining by the vehicle terminal the idle parking place as the shared parking place, the method further includes: sending by the vehicle terminal the shared parking place to a cloud server, wherein, the cloud server is configured to push the shared parking place to a client.

In the embodiment of the present application, the map information includes: a parking place distribution information.

According to another embodiment of the present application, a parking place determination device located in a vehicle terminal is provided, including: a first detection module, configured to detect whether there is an idle area in an area whose distance from a vehicle where the vehicle terminal is located is less than a predetermined distance, to obtain a detection result; and a judgment module, configured to judge whether there is an idle parking place in the idle area according to a map information when the detection result indicates a presence of the idle area.

In the embodiment of the application, the device further includes: a determination module, configured to determine the idle parking place as a shared parking place when the judgment result indicates a presence of the idle parking place.

In the embodiment of the present application, the device further includes: a second detection module, configured to detect a running speed of the vehicle, wherein, when the running speed is less than a predetermined threshold, the first detection module is triggered to detect whether there is the idle area in the area whose distance is less than the predetermined distance.

In the embodiment of the present application, the judgment module is further configured to judge whether there is the parking place in the idle area according to the map information, and judge whether the parking place is the idle parking place according to the detection result when the judgment result indicates the presence of the parking place.

In the embodiment of the present application, the judgment module is further configured to judge whether the idle area includes a parking area according to the map information, and judge whether there is the parking place in the parking area according to the map information when it is determined that the idle area includes the parking area.

In the embodiment of the present application, the device further includes: a sending module, configured to send the shared parking place to a cloud server, wherein the cloud server is configured to push the shared parking place to a client.

In the embodiment of the present application, the map information includes: a parking place distribution information.

According to another embodiment of the present application, a storage medium is further provided. The storage medium is configured to store the program code for executing the following steps: detecting by a vehicle terminal whether there is an idle area in an area whose distance from a vehicle where the vehicle terminal is located is less than a predetermined distance, to obtain a detection result; and judging by the vehicle terminal whether there is an idle parking place in the idle area according to a map information when the detection result indicates a presence of the idle area.

According to another embodiment of the present application, a processor is further provided, configured to run a program, wherein the program when executed, causes to perform the method described above.

According to the embodiments of the present application, since the idle parking place is judged by the vehicle terminal, there is no need to reconstruct the parking places or negotiate with the owners of various parking lots, thereby solving the problem of poor user experience caused by the need to reconstruct the parking places or the parking lots to obtain an idle parking place in related art, and improving the user experience.

### BRIEF DESCRIPTION OF THE DRAWINGS

The accompanying drawings described herein are used to provide a further understanding of the present application and form part of the present application. The illustrative embodiments of the present application and their explanations are used to explain the present application, and do not constitute undue limitations on the present application. In the drawings:
Fig. 1 is a first structure diagram of a vehicle terminal provided by a preferred embodiment of the present application.
Fig. 2 is a second structure diagram of a vehicle terminal provided by a preferred embodiment of the present application.
Fig. 3 is a schematic structure diagram of a parking place sharing system provided by an embodiment of the present application.
Fig. 4 is a flow diagram of a parking place determination method provided by an embodiment of the present application.
Fig. 5 is a structure diagram of a parking place determination device according to an embodiment of the present application.
Fig. 6 is a functional collaboration diagram of each component of a vehicle terminal product provided by a preferred embodiment of the present application.
Fig.7 is a flow-process diagram of the working mode of the vehicle terminal product used in Fig. 6 in a preferred embodiment of the present application.

### DETAILED DESCRIPTION

The present application will be described in detail below with reference to the accompanying drawings and in conjunction with embodiments. It should be noted that, without conflict, the embodiments of the present application and the features of the embodiments may be combined with each other.

It should be noted that the terms "first" "second" and so on in the description, the claims and the above drawings of the present application are used to distinguish similar objects, rather than to describe a particular order or sequence.

### Embodiment 1

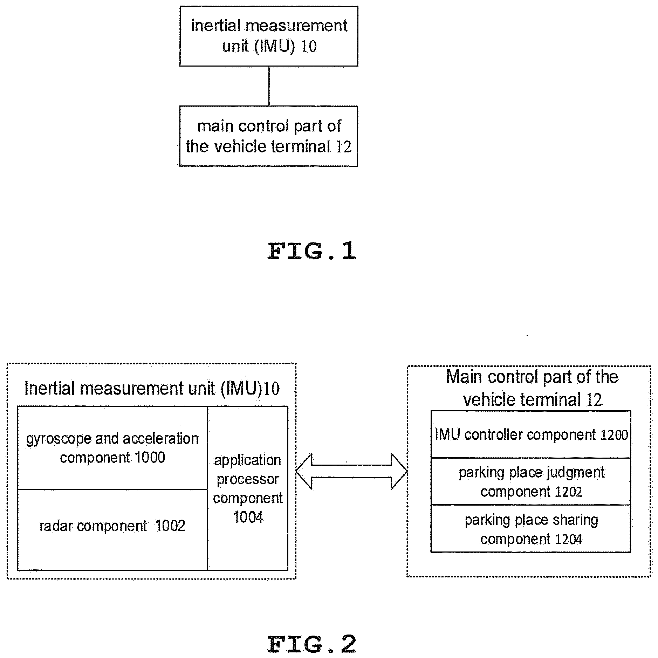

The embodiment of the present application provides a vehicle terminal. Fig. 1 is a first structure diagram of the vehicle terminal provided by a preferred embodiment of the present application. As shown in Fig. 1, the vehicle terminal includes:
an inertial measurement unit (IMU) 10, configured to detect whether there is an idle area in an area whose distance from a vehicle where the vehicle terminal is located is less than a predetermined distance, to obtain a detection result ;
a main control part 12 of the vehicle terminal connected to the IMU 10, configured to detect whether there is an idle parking place in the idle area according to a map information when the detection result indicates a presence of the idle area.

The vehicle terminal provided by this application can determine whether there is the idle parking place in the area whose distance from the vehicle where the vehicle terminal is located is less than the predetermined distance through the IMU 10 and the main control part 12 of the vehicle terminal. That is, the idle parking place can be determined by the vehicle terminal, without the need to reconstruct parking places or negotiate with the owners of various parking lots, thus solving the problem of poor user experience caused by the need to reconstruct parking places or parking lots to obtain an idle parking place in related art, and improving the user experience.

In one embodiment of the present application, the main control part 12 of the vehicle terminal is further configured to determine the idle parking place as a shared parking place when it is determined that there is the idle parking place.

It should be noted that the IMU 10 can further be configured to detect a running speed of the vehicle, wherein, when the running speed is less than a predetermined threshold, a detection on whether there is the idle area in the area whose distance is less than the predetermined distance is triggered.

It should be noted that the predetermined threshold can be set according to specific circumstances, for example, the predetermined threshold can be set to 10Km, but not limited to this.

Fig. 2 is a second structure diagram of the vehicle terminal provided by a preferred embodiment of the present application. As shown in Fig. 2, in one embodiment of the present application, the IMU 10 mentioned above may include: a gyroscope and acceleration component 1000, configured to detect a running speed; a radar component 1002 connected to the gyroscope and the acceleration component 1000 and configured to detect whether there is the idle area in the area whose distance is less than the predetermined distance, to obtain the detection result; and an application processor component 1004 connected to the radar component 1002 and configured to send the running speed and/or the detection result to the main control part 12 of the vehicle terminal; wherein the radar component is started when the running speed is less than the predetermined threshold.

It should be noted that when the running speed is greater than the predetermined threshold, the radar component is turned off, but the application is not limited thereto.

It should be noted that the gyroscope and acceleration component 1000 may include: a three-axis gyroscope component, configured to measure a location, a moving trajectory and an angular speed of the vehicle; and a three-axis acceleration component, configured to measure an acceleration of the vehicle. The running speed of the vehicle is determined according to physical quantities measured by the three-axis gyroscope component and the three-axis acceleration component.

It should be noted that the three-axis gyroscope component measures the locations, moving trajectories and angular speeds in multiple directions, such as six directions; the three-axis acceleration component may measure the accelerations in multiple directions, such as accelerations in three directions.

It should be noted that directions of the three-axis acceleration is XYZ, and directions of the three-axis gyroscope is three-axis gyroscope, which can be combined into six directions. It should be noted that the three-axis acceleration component can be composed of an accelerometer, which can be configured to measure an acceleration. The acceleration is integrated using the known initial speed measured by GPS, and such information as the speed and location etc., of the carrier can be known. The three-axis gyroscope component can be composed of gyroscopes, which can further be configured to measure the turning or gradient changes of an equipment.

As shown in Fig. 2, the main control part 12 of the vehicle terminal may include: an IMU controller component 1200, configured to receive the detection result sent by the IMU; and a parking place judgment component 1202 connected to the IMU controller component 1200 and configured to receive the detection result sent by the IMU controller component 1200; judge whether there is the idle parking place in the idle area according to the map information when the detection result indicates the presence of the idle area; and determine that there is the idle parking place in the area when the judgment result indicates the presence of the idle parking place.

It should be noted that the parking place judgment component 1202 can further be configured to judge whether there is the parking place in the idle area according to the map information, and judge whether the parking place is the idle parking place according to the detection result when there is the parking place.

It should be noted that the parking place judgment component 1202 can further be configured to judge whether the idle area includes a parking area according to the map information; and judge whether there is the parking place in the parking area according to the map information when it is determined that the idle area includes the parking area.

It should be noted that the map information can include: a parking place distribution information, which is not limited thereto. For example, the map information can further include: a current location information of a vehicle, geographic information system (GIS) information. It can be determined according to the map information on whether there is a legitimate parking place in this area, that is, whether there is a parking area planned by the government (such as public parking lot, residential parking lot, roadside idle area, etc), and then it can be judged on whether there is an idle parking place according to the above detection result and GIS information. It should be noted that the above detection result focuses on the feedback of an idle location, then GIS information can be used to know whether the idle location is a parking place. If it is a parking place, it can be determined that there is an idle parking place in the area whose distance is less than the predetermined distance. The judging way for the idle parking place is not limited to this.

In order to share the determined idle parking place to other vehicles, in one embodiment of the present application, the main control part 12 of the vehicle terminal can further be configured to send the idle parking place to a cloud server.

It should be noted that the cloud server can be configured to push the idle parking place information to one or more clients according to a predetermined push strategy. It should be noted that one or more of the clients may be registered clients, but may be not limited thereto.

It should be noted that the main control part 12 of the vehicle terminal may include: a parking place sharing component 1204 connected to the parking place judgment component 1202 and configured to receive the idle parking place sent by the parking place judgment component 1202 of the main control part 12 of the vehicle terminal and send the idle parking place to the cloud server.

Through the above vehicle terminal, the function of dynamic sharing of parking place can be realized.

### Embodiment 2

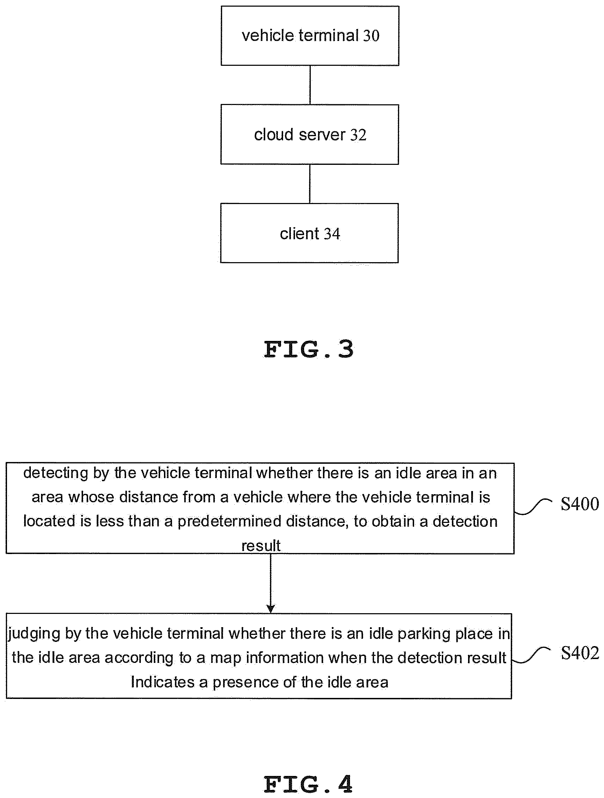

According to another embodiment of the present application, a parking place sharing system is provided. Fig. 3 is a schematic structure diagram of the parking place sharing system provided by an embodiment of the present application. As shown in Fig. 3, the parking place sharing system includes: the vehicle terminal 30 in embodiment 1, a cloud server 32 and a client 34; wherein, the cloud server 32 receives an information of the idle parking place sent by the vehicle terminal 30, and pushes the information of the idle parking place to the client 34 according to geographic information system (GIS) information; the client 34 is configured to receive the information of the idle parking place sent by the cloud server 32, and display the information of the idle parking place.

For the explanation of the vehicle terminal 30, reference is made to the description of embodiment 1, which will not be repeated herein.

It should be noted that the cloud server 32 may push the idle parking place to the client 34 either actively or passively, which is not limited herein.

By means of this system, the vehicle terminal 30 sends the information of the idle parking place to the cloud server 32 after determining the idle parking place; the cloud server 32 can push the obtained information of the idle parking place to the client 34, thus the function of dynamical sharing of the parking places can be realized without the need to reconstruct parking place or negotiate with the owners of various parking lots, and thus solving the problem of poor user experience caused by the need to reconstruct parking place or parking lot to obtain an idle parking place in related art, and improving the user experience.

### Embodiment 3

In this embodiment, a parking place determination method is provided. Fig. 4 is a flow diagram of the parking place determination method provided by an embodiment of the present application. As shown in Fig. 4, the method includes:
step S400: detecting by a vehicle terminal whether there is an idle area in an area whose distance from a vehicle where the vehicle terminal is located is less than a predetermined distance, to obtain a detection result;
step S402: judging by the vehicle terminal whether there is an idle parking place in the idle area according to a map information when the detection result indicates a presence of the idle area.

In the above steps, it is determined by the vehicle terminal on whether there is the idle parking place in the area whose distance from the vehicle where the vehicle terminal is located is less than the predetermined distance, that is, the idle parking place is judged by the vehicle terminal without the need to reconstruct parking places or negotiate with the owners of various parking lots, thus solving the problem of poor user experience caused by the need to reconstruct the parking places or parking lots to obtain the idle parking place in related art, and improving the user experience.

In one embodiment of the present application, after the step S402, the method can further include: determining by the vehicle terminal the idle parking place as a shared parking place when the judgment result indicates a presence of the idle parking place.

In one embodiment of the present application, prior to the step S400, the method may further include: detecting by the vehicle terminal a running speed of the vehicle, wherein, when the running speed is less than a predetermined threshold, a detection on whether there is the idle area in the area whose distance is less than the predetermined distance is triggered.

It should be noted that the predetermined threshold can be set according to specific circumstances, for example, the predetermined threshold can be set to 10Km, but id not limited thereto.

In one embodiment of the present application, the step S402 may include: judging by the vehicle terminal whether there is the parking place in the idle area according to the map information; and judging by the vehicle terminal whether the parking place is the idle parking place according to the detection result when the judgment result indicates the presence of the parking place.

It needs to be explained that judging by the vehicle terminal whether there is parking place in the idle area according to the map information includes: judging by the vehicle terminal whether the idle area includes a parking area according to the map information, and judging whether there is the parking place in the parking area according to the map information when it is determined that the idle area includes the parking area.

It should be noted that the map information can include, but not limited to, a parking place distribution information. For example, the map information can further include a current location information of a vehicle and geographic information system (GIS) information. The parking places mentioned above refer to the legitimate parking places planned by the government, but are not limited thereto.

In one embodiment of the present application, after determining by the vehicle terminal the idle parking place as the shared parking place when the detection result indicates the presence of the idle area, the method further includes: sending by the vehicle terminal the shared parking place to a cloud server, wherein, the cloud server is configured to push the shared parking place to a client. By means of this method, the information of the idle parking place can be shared to other clients, and the dynamic sharing of parking place can be realized.

Through describing the above implementation ways, it is clear to those skilled in the art that the methods according to the above embodiments can be implemented by means of software plus the necessary general hardware platform, or, of course, by means of hardware, but in many cases, the former is a better implementation way. Based on this understanding, the technical schemes of the present application, in essence, or the part contributing to the prior art, can be embodied in the form of a software product. The computer software product is stored in a storage medium (such as ROM/RAM, disk, CD), including several instructions to enable a terminal equipment (such as a mobile phone, computer, server, or network equipment) to implement the method described in various embodiments of the present application.

### Embodiment 4

In the present embodiment, a parking place determination device is further provided. The device is used to implement the above embodiments and preferred implementation ways, and those that have already been explained will not be repeated. As used below, the term "module" may be a combination of software and/or hardware which can implement a predetermined function. Although the device described in the following embodiments is preferably implemented in software, the implementation of hardware, or a combination of software and hardware, is also possible and may be conceived.

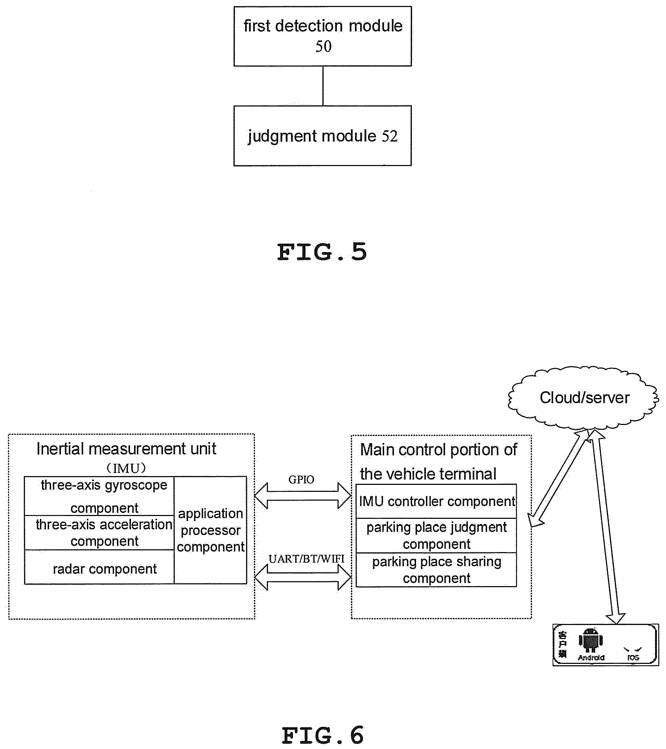

Fig. 5 is a structure diagram of a parking place determination device according to an embodiment of the present application. As shown in Fig. 5, the device includes:
a first detection module 50, configured to detect whether there is an idle area in an area whose distance from a vehicle where a vehicle terminal is located is less than a predetermined distance, to obtain a detection result; and
a judgment module 52 connected to the first detection module 50 and configured to judge whether there is an idle parking place in the idle area according to a map information when the detection result indicates a presence of the idle area.

By means of the above device, it is determined on whether there is the idle parking place in the area whose distance from the vehicle where the vehicle terminal is located is less than the predetermined distance. That is to say, by judging the idle parking place, there is no need to reconstruct the parking place, nor to negotiate with the owners of various parking lots, thus solving the problem of poor user experience caused by the need to reconstruct parking places or parking lots to obtain an idle parking place in related art, and improving the user experience.

It should be noted that the device can be located in the vehicle terminal, but is not limited thereto.

In one embodiment of the present application, the device may further include: a determination module connected to the judgment module 52 and configured to determine the idle parking place as a shared parking place when the judgment result indicates a presence of the idle parking place.

In one embodiment of the present application, the device may further include a second detection module connected to the first detection module 50 and configured to detect a running speed of the vehicle, wherein, when the running speed is less than a predetermined threshold, the first detection module is triggered to detect whether there is the idle area in the area whose distance is less than the predetermined distance.

It should be noted that the judgment module 52 can further be configured to judge whether there is the parking place in the idle area according to the map information, and judge whether the parking place is the idle parking place according to the detection result when the judgment result indicates the presence of the parking place.

It should be noted that the judgment module 52 can further be configured to judge whether the idle area includes a parking area according to the map information, and judge whether there is the parking place in the parking area according to the map information when it is determined that the idle area includes the parking area.

In one embodiment of the present application, the device may further include: a sending module connected to the determination module and configured to send the shared parking place to a cloud server, wherein the cloud server is configured to push the shared parking place to a client. The function of dynamic sharing of parking place can be realized.

It should be noted that the map information can include, but not limited to, a parking place distribution information. For example, the map information can further include a current location information of a vehicle and geographic information system (GIS) information. The parking places mentioned above refer to the legitimate parking places planned by the government, but they are not limited thereto.

It should be noted that the above modules can be implemented by software or hardware. For the latter, it can be implemented in the following way, but not limited to, all the above modules being located in a same processor; or, the above modules being located in different processors in any combination.

### Embodiment 5

In the embodiment of the present application, a storage medium is further provided. In the present embodiment, the storage medium may be configured to store program codes for performing the steps of the method in embodiment 3.

In the present embodiment of the present application, the storage medium may include, but not limited to, a variety of media capable of storing program codes, such as a USB flash drive, a read-only memory(ROM), a random access memory(RAM), a mobile hard disk, a magnetic disk or a compact disc (CD) etc.

In the present embodiment of the present application, a processor executes the steps of the method in embodiment 3 according to the stored program codes in the storage medium.

In the embodiment of the present application, specific example in the present embodiment may refer to the above embodiments and examples described in alternative implementation ways, which are not repeated herein.

In order to better understand the present application, the present application is further explained in conjunction with the preferred embodiments below.

The technical problem to be solved by the preferred embodiments of the present application is to overcome the limitation in the prior art that it must rely on the reconstruction of parking place or the open data of parking lot, and to provide a new type of vehicle mobile terminal for dynamic sharing of parking place through the inertial measurement unit.

The preferred embodiments of the present application adopts the following technical schemes:

The vehicle terminal equipment is divided into two portions: an inertial measurement unit (IMU) and a main control portion of the vehicle mobile terminal. The inertial measurement unit includes four modules: a three-axis gyroscope component, a three-axis accelerometer component, a radar component and an application processor component. The main control of the vehicle mobile terminal includes three modules: an IMU controller component, a parking place judgment component and a parking place sharing component. Through these modules, the function of dynamic sharing of parking place can be realized based on the cooperation of a cloud server and a mobile client.

The vehicle terminal described in the preferred embodiments of the present application includes seven modules. The functions and implementation ways of respective module are listed as follows.

### 1. Three-axis gyroscope component:

This module includes a set of three-axis gyroscope sensors, which can simultaneously measure the locations, moving trajectories and angular speeds in six directions, so as to judge a motion state of an object.

### 2. Three-axis accelerometer component:

This module includes a set of three-axis accelerometer sensors, which can simultaneously measure the accelerations in three directions. In present patent, the gyroscope and the accelerometer work together to complete the purpose of vehicle speed detection.

### 3. Radar component:

This module includes a set of low-frequency photoelectric/infrared radar sensors, which can be installed in different locations of the vehicle according to a measurement range, mainly for the purpose of sensing measurement in a nearby area .

### 4. Application processor component:

This module is the core component of the IMU portion, which mainly completes the summarization of vehicle status data and the summarization of radar detection result, and carries out two-way communication with the main control portion of the vehicle terminal. The interfaces for the two-way communication between the IMU and the vehicle mobile terminal include universal asynchronous receiver and transmitter(UART), wireless fidelity(WIFI), Blue Tooth(BT) and general purpose input/output(GPIO) and so on.

### 5. IMU controller component:

This module receives the vehicle status information and the radar detection result transmitted by the IMU, and sends them to the parking place judgment component.

### 6. Parking place judgment component:

This module is the core component of the whole patent. Through real-time analysis of the vehicle status and the radar detection result, in conjunction with the actual physical location of the vehicle and the map information, it can comprehensively judge whether there is an idle parking place nearby. If the judgment result shows that there is an idle parking place information, the related information is sent to the parking place sharing component.

### 7. Parking place sharing component:

This module is responsible for sending the parking place information that has been judged to be shared to the cloud server.

In addition to the vehicle terminal, two modules are needed to complete the functions described in the patent.

### Functions:

### 1. Cloud server:

The cloud server is responsible for collecting the idle parking place information from each vehicle terminal and pushing the information to a registered mobile client based on GIS.

### 2. Mobile client:

The mobile client is responsible for receiving the location information of all the shared parking places which is pushed from the cloud server, and displaying dynamically the information on the user's mobile client.

In the functional implementation defined in the preferred embodiments of the present application, the working order and interaction among the modules are listed as follows:
Step 1: continuously detecting by the gyroscope and accelerometer component the vehicle status, and starting the radar component when the speed is less than 10KM. Specific vehicle status has rich implications and is considered as a speed in the current step.
Step 2: detecting by the radar component the surrounding area and sending the data to the application processor component according to the detection results. The radar detection results indicate the size of the current available area, the shape of the available area, the continuity of the available area and so on. The radar component will make preliminary judgment based on such information as a preset size value of the parking place, definition of the shape of the parking place and so forth. The final effective parking place information is completed in step 5.
Step 3: after receiving the vehicle status information and the radar detection results, sending by the application processor component the related data to the vehicle mobile terminal.

The three steps mentioned above are the interaction of all the components of the IMU portion.

Step 4: transmitting by the IMU controller component the data transmitted by the IMU to the parking place judgment component in a pass-through manner.

Step 5: after receiving the above data, judging by the parking place judgment component whether there is an effective idle parking place according to the current vehicle location, speed, map information and other conditions. If yes, the result is sent to the parking place sharing component. The parking place judgment component is the core step of this patent. In this step, the judgment of the idle parking place is really realized, and it is judged in the vehicle terminal without the cloud involvement. Specific judgment methods are as follows: first, acquiring the current vehicle location information, and then predicting in conjunction with GIS information,whether the current location is a legitimate parking area, such as public parking lot, residential parking lot, roadside idle area, etc. If it is a legitimate parking area, in conjunction with the vehicle status information, vehicle radar scanning result transmitted by IMU, and GIS information, judging whether there is a suitable parking place. The definition of a suitable parking place is that the feedback of the radar information only indicates an idle location, but it needs to be judged in conjunction with GIS information that whether the idle location is a parking place. If it is judged to be true, the whole result of the parking place judgment component is true, which means that there is an idle parking place in the current area and the location can be indicated. If it is an area with unknown GIS information such as underground parking lot, it can only be judged whether there is an idle parking place, and the specific location information can not be indicated.

Step 6: sending by the parking place sharing component the result for the idle parking place to the cloud server.

The above three steps are the interaction of various components of the main control portion of the vehicle mobile terminal.

Step 7: sending by the cloud server the idle parking place information to related mobile clients through active push mechanism.

Fig. 6 is a functional collaboration diagram of various modules of vehicle terminal product provided by a preferred embodiment of the present application. As shown in Fig. 6, the vehicle terminal product mainly includes two potions: an inertial measurement unit and a main control portion of the vehicle mobile terminal (equivalent to the main control part 12 of the vehicle terminal). The inertial measurement unit includes four modules: a three-axis gyroscope component, a three-axis accelerometer component, a radar component and an application processor component. The main control of the vehicle mobile terminal includes three modules: an IMU controller component, a parking place judgment component and a parking place sharing component.

Firstly, when it is judged by the gyroscope component and the accelerometer component of the IMU that the current vehicle speed is less than 10KM/h, an instruction to start a radar detection is initiated. The radar component transmits the detection result to the main control portion of the vehicle mobile terminal through the application processor.

Secondly, the IMU controller component of the main control portion of the vehicle mobile terminal, upon receiving the data transmitted by the IMU, transmits the data to the parking place judgment component in a pass-through manner. The parking place judgment component judges whether there is an idle parking place through the synthesis of multiple correlation conditions. These correlation conditions include the current vehicle speed, location, direction trajectory, corresponding specific GIS information and so on. If the judgment result shows that there is the idle parking place, the specific parking place information is sent to the cloud server through the parking place sharing component.

Finally, the cloud server sends the idle parking place information to the corresponding clients in an active push manner, and finally achieves the function of dynamic sharing of parking place.

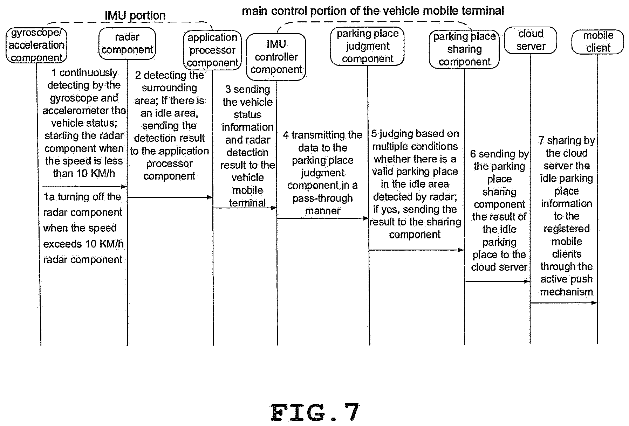

Fig. 7 is a flow-process diagram of the working mode of the vehicle terminal product used in Fig. 6 in a preferred embodiment of the present application. As shown in Fig. 7, the process includes:
Step 1: continuously detecting by the gyroscope and accelerometer of the IMU the vehicle status; starting the radar component when the speed is less than 10KM, or turning off the radar component when the speed exceeds 10 KM.
Step 2: after receiving a startup instruction, starting by the radar component to detect the surrounding area; if there is an idle area, sending the detection result to the application processor component.
Step 3: sending by the application processor component the vehicle status information and radar detection result to the main control portion of the vehicle mobile terminal through different types of physical links.
Step 4: after receiving the related data sent by the IMU, transmitting by the IMU controller component the data to the parking place judgment component in a pass-through manner.
Step 5: after receiving the related information, judging by the parking place judgment component based on multiple conditions whether there is a valid parking place in the idle area detected by radar; if yes, sending the result to the sharing component.
Step 6: sending by the parking place sharing component the result of the idle parking place to the cloud server.
Step 7: sharing by the cloud server the idle parking place information to the registered mobile clients through the active push mechanism.

So far, the function of dynamical sharing of parking place by inertial measurement unit is declared to be completed.

It should be noted that the above process approach can be applied to the following scenarios:
An user starts a vehicle and a vehicle terminal is started synchronously. When the vehicle speed is less than 10KM/h, the parking place detection radar starts to detect. The vehicle terminal judges whether the idle parking place detected by the detection radar is a valid information. If yes, the parking place information is sent to the cloud server, which will actively push the shared parking place information to other registered mobile clients, so that the current situation of idle parking place in all areas can be seen on all registered mobile clients.

The preferred embodiments of the application can make the function of dynamic sharing of parking place have the following advantages, which improves the user experience:
(1) There is no need to reconstruct parking places, which greatly reduces the application cost of the function .
(2) There is no need to negotiate with the owners of various parking lots to share the parking place data, and the function can be realized dynamically through the vehicle terminal itself, without the need of the coordination of parking lots.

The preferred embodiment of the present application further provides embodiments of two parking place sharing:
1. Accurate algorithm and big data analysis are used to realize parking place sharing. The specific implementation method is to predict an idle parking place in a target area through the vehicle mobile data and special accurate algorithm. In short, the number of idle parking places in the target area is calculated using the data of the parking places and a parking lot map. The accurate algorithm may provide a prediction result of parking places at a destination in comprehensive consideration of time, weather, recent focus social events, related traffic policies, and regulations, in conjunction with current movement information (driving or parking, etc) provided by a vehicle. Users can know whether there is a parking place available according to the result. The core of this scheme is algorithm plus data. The result provided by this scheme is possibility, not necessity, that is to say, the probability of idle parking place number at a destination is provided. Users need to judge by themselves whether to go or not according to this result. If the probability is low, the users may think that there are few idle parking places in this area; otherwise, there are many. This method is the realization principle of the product produced by cooperation between BMW and a big data algorithm company in Silicon Valley.
2. Parking place sharing is realized by vehicle equipment in conjunction with a sensor on a parking place. The specific implementation method is that the sensor on the parking place update parking place information to the vehicle equipment in real time through near field communication (NFC)/BT/WIFI. Then, the vehicle equipment uploads the parking place information to a cloud server in real time, and the server decides whether to update the parking place information to all vehicle network terminals after judging. In order to realize the scheme, it needs to add a sensor to a parking place, which will increase the cost of the overall scheme implementation.

Obviously, it should be understood by those skilled in the art that the above components or steps of the application can be implemented by a general computing device, which can be centralized on a single computing device or distributed on a network composed of multiple computing devices. Optionally, they can be implemented with program codes executable by the computing device so that they can be stored in a storage device and executed by the computing device. In some cases, the steps shown or described may be performed in an order different from the order shown herein, or they may be fabricated into individual integrated circuit modules, or multiple modules or steps among them may be fabricated into a single integrated circuit module to implement. In this way, the present application is not limited to any particular combination of hardware and software.

The above description is only the preferred embodiments of the present application and is not intended to limit the present application. For those skilled in the art, the present application may have various modifications and changes. Any modification, equivalent replacement, improvement etc made within the spirit and principles of the application shall be included in the scope of protection of the application.

### Industrial applicability

Based on the technical schemes provided in the embodiments of the present application, since idle parking place is judged by the vehicle terminal, there is no need to reconstruct parking places, nor to negotiate with the owners of various parking lots, thus solving the problem of poor user experience caused by the need to reconstruct parking places or parking lots to obtain an idle parking place in related art, and improving the user experience.

## Claims

1. A vehicle terminal, comprising:
an inertial measurement unit(IMU), configured to detect whether there is an idle area in an area whose distance from a vehicle where the vehicle terminal is located is less than a predetermined distance, to obtain a detection result; and
a main control part of the vehicle terminal, configured to judge whether there is an idle parking place in the idle area according to a map information when the detection result indicates a presence of the idle area.

2. The vehicle terminal according to claim 1, wherein, the main control part of the vehicle terminal is further configured to determine the idle parking place as a shared parking place when the judgment result indicates a presence of the idle parking place.

3. The vehicle terminal according to claim 1, wherein the IMU is further configured to detect a running speed of the vehicle, wherein, when the running speed is less than a predetermined threshold, a detection on whether there is the idle area in the area whose distance is less than the predetermined distance is triggered.

4. The vehicle terminal according to claim 3, wherein, the IMU comprises:
a gyroscope and acceleration component, configured to detect the running speed;
a radar component, configured to detect whether there is the idle area in the area whose distance is less than the predetermined distance, to obtain the detection result; and
an application processor component, configured to send the running speed and/or the detection result to the main control part of the vehicle terminal;
wherein, when the running speed is less than the predetermined threshold, the radar component is started.

5. The vehicle terminal according to claim 4, wherein, the gyroscope and acceleration component comprises:
a three-axis gyroscope component, configured to measure a location, a moving trajectory and an angular speed of the vehicle; and
a three-axis acceleration component, configured to measure an acceleration of the vehicle.

6. The vehicle terminal according to claim 1, wherein, the main control part of the vehicle terminal comprises:
an IMU controller component, configured to receive the detection result sent by the IMU; and
a parking place judgment component, configured to receive the detection result sent by the IMU controller component and, judge whether there is the idle parking place in the idle area according to the map information when the detection result indicates the presence of the idle area.

7. The vehicle terminal according to claim 6, wherein, the parking place judgment component is configured to judge whether there is the parking place in the idle area according to the map information and, judge whether the parking place is the idle parking place according to the detection result when there is the parking place.

8. The vehicle terminal according to claim 7, wherein, the parking place judgment component is configured to judge whether the idle area includes a parking area according to the map information and, judge whether there is the parking place in the parking area according to the map information when it is determined that the idle area includes the parking area.

9. The vehicle terminal according to claim 1, 7 or 8, wherein, the main control part of the vehicle terminal is further configured to send the idle parking place to a cloud server.

10. The vehicle terminal according to claim 9, wherein, the main control part of the vehicle terminal comprises a parking place sharing component, configured to receive the idle parking place sent by the parking place judgment component of the main control part of the vehicle terminal and send the idle parking place to the cloud service.

11. The vehicle terminal according to claim 9, wherein, the cloud server is configured to push an information of the idle parking place to one or more clients according to a predetermined push strategy.

12. The vehicle terminal according to claim 1,6,7 or 8, wherein, the map information comprises a parking place distribution information.

13. A parking place sharing system, comprising the vehicle terminal according to any of claims 1 to 9, a cloud server and a client;
wherein, the cloud server receives an information of the idle parking place sent by the vehicle terminal, and pushes the information of idle parking place to the client based on geographic information system (GIS) information; the client is configured to receive the information of the idle parking place sent by the cloud server and display the information of the idle parking place.

14. A parking place determination method, comprising:
detecting by a vehicle terminal whether there is an idle area in an area whose distance from a vehicle where the vehicle terminal is located is less than a predetermined distance, to obtain a detection result; and
judging by the vehicle terminal whether there is an idle parking place in the idle area according to a map information when the detection result indicates a presence of the idle area.

15. The method according to claim 14, wherein, after judging by the vehicle terminal whether there is the idle parking place in the idle area according to the map information when the detection result indicates the presence of the idle area, the method further comprises:
determining by the vehicle terminal the idle parking place as a shared parking place when the judgment result indicates a presence of the idle parking place.

16. The method according to claim 14, wherein, before detecting by the vehicle terminal whether there is the idle area in the area whose distance from the vehicle where the vehicle terminal is located is less than the predetermined distance to obtain the detection result, the method further comprises:
detecting by the vehicle terminal a running speed of the vehicle, wherein, when the speed is less than a predetermined threshold, a detection on whether there is the idle area in the area whose distance is less than the predetermined distance is triggered.

17. The method according to claim 14, wherein, judging by the vehicle terminal whether there is the idle parking place in the idle area according to the map information when the detection result indicates the presence of the idle area comprises:
judging by the vehicle terminal whether there is the parking place in the idle area according to the map information; and
judging by the vehicle terminal whether the parking place is the idle parking place according to the detection result when the judgment result indicates the presence of the parking place.

18. The method according to claim 17, wherein, judging by the vehicle terminal whether there is the parking place in the idle area according to the map information comprises:
judging by the vehicle terminal whether the idle area includes a parking area according to the map information, and judging whether there is the parking place in the parking area according to the map information when it is determined that the idle area includes the parking area.

19. The method according to claim 15, wherein, after determining by the vehicle terminal the idle parking place as the shared parking place, the method further comprises:
sending by the vehicle terminal the shared parking place to a cloud server, wherein, the cloud server is configured to push the shared parking place to a client.

20. The method according to any of claims 14 to 19, wherein, the map information comprises a parking place distribution information.

21. A parking place determination device, located in a vehicle terminal, comprising:
a first detection module, configured to detect whether there is an idle area in an area whose distance from a vehicle where the vehicle terminal is located is less than a predetermined distance, to obtain a detection result; and
a judgment module, configured to judge whether there is an idle parking place in the idle area according to a map information when the detection result indicates a presence of the idle area.

22. The device according to claim 21, wherein, the device further comprises:
a determination module, configured to determine the idle parking place as a shared parking place when the judgment result indicates a presence of the idle parking place.

23. The device according to claim 21, wherein, the device further comprises:
a second detection module, configured to detect a running speed of the vehicle, wherein, when the running speed is less than a predetermined threshold, the first detection module is triggered to detect whether there is the idle area in the area whose distance is less than the predetermined distance.

24. The device according to claim 21, wherein, the judgment module is further configured to judge whether there is the parking place in the idle area according to the map information, and judge whether the parking place is the idle parking place according to the detection result when the judgment result indicates the presence of the parking place.

25. The device according to claim 24, wherein, the judgment module is further configured to judge whether the idle area includes a parking area according to the map information, and judge whether there is the parking place in the parking area according to the map information when it is determined that the idle area includes the parking area.

26. The device according to claim 22, wherein, the device further comprises:
a sending module, configured to send the shared parking place to a cloud server, wherein the cloud server is configured to push the shared parking place to a client.

27. The device according to any of the claims 21 to 26, wherein, the map information comprises a parking place distribution information.

28. A storage medium, comprising a stored program, wherein the program when executed, causes to perform the method according to any one of claims 14 to 20.

29. A processor, configured to run a program, wherein the program when executed, causes to perform the method according to any one of claims 14 to 20.
